(19) Europäisches Patentamt
European Patent Office
Office européen des brevets

(11) **EP 4 757 156 A1**

(12) **EUROPEAN PATENT APPLICATION**

(43) Date of publication:
**10.06.2026 Bulletin 2026/24**

(21) Application number: **25218986.5**

(22) Date of filing: **27.11.2025**

(51) International Patent Classification (IPC):
**H02M 1/42** *(2007.01)*　　**H02M 1/44** *(2007.01)*
**H02M 1/00** *(2006.01)*　　**H02M 1/12** *(2006.01)*

(52) Cooperative Patent Classification (CPC):
**H02M 1/4225; H02M 1/4233; H02M 1/44;**
H02M 1/0009; H02M 1/0025; H02M 1/126

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **09.12.2024 US 202418974090**

(71) Applicant: **NXP USA, Inc.
Austin, TX 78735 (US)**

(72) Inventor: **Twelkemeijer, Remco
5656AG Eindhoven (NL)**

(74) Representative: **Krott, Michel
NXP Semiconductors
Intellectual Property Group
High Tech Campus 60
5656 AG Eindhoven (NL)**

Remarks:
Amended claims in accordance with Rule 137(2)
EPC.

(54) **CURRENT SENSOR FOR TOTEM POLE POWER FACTOR CORRECTION CIRCUIT**

(57) A power factor correction (PFC) circuit is described which includes an inductor configured to generate an output voltage to an output load, an output voltage sensor, an output current measurement circuit, a first filter capacitor coupled between the output voltage and a first input node, a second filter capacitor between the first input node and a low voltage, and a first input node voltage sensor. Capacitor compensation logic is configured to receive the output current and the first input node voltage, to compensate the output current for the first filter capacitor and the second filter capacitor using the first input node voltage, and to generate a corrected output current. A control system is coupled to receive the output voltage and the corrected output current and configured to generate control signals to control the output voltage.

FIG. 8

EP 4 757 156 A1

**Description**

FIELD

The present disclosure is directed in general to the field of electrical power circuits and, in particular to a current sensor for a totem pole power factor correction circuit.

BACKGROUND

Semiconductor devices are continuously called to do more with less power in a smaller size. Many of the advances in size and power have come by reducing the size of the transistors and other components of a semiconductor device. This not only allows more transistors to fit into a smaller space on a semiconductor die. It also allows the voltage and total power to be reduced when signals traverse shorter distances through smaller components. The size of the features in the semiconductor is often expressed as a process node named terms of nanometers (nm). Designations of 40nm to 28nm to 16nm to 7nm to now 5nm or 3nm are used to describe increasingly smaller transistors and increasingly more dense circuit placement. Additional advances come from using different component configurations, such as FinFET in which a Field Effect Transistor (FET) is built on a vertical fin a configuration which allows transistors to be placed closer together or Fully Depleted Silicon on Insulator (FDSOI) a configuration which improves electrostatic control.

Electric power conversion is widely used in varied applications including adjustable-speed electric motor drives, switch-mode power supplies (SMPS), uninterrupted power supplies (UPSs), and battery energy storage. In various applications, two or more SMPS converters are combined as multiple stages to improve the performance and reduce the size of a power converter. A boost converter supplies a higher output voltage than its input voltage, while a buck converter supplies a lower output voltage than its input voltage.

One example boost converter is a Power Factor Correction (PFC) circuit. In a PFC circuit the input current and the output current can be measured and used by a control system to regulate the output voltage of the PFC. In some PFC circuits, a diode bridge rectifier is used to generate the input voltage. The input current flowing through the bridge rectifier may be measured at a sense resistor between the diode bridge rectifier and an SMPS controller ground of the PFC circuit. In a totem pole PFC circuit, at least two of the diodes of the diode bridge rectifier are replaced by switches, e.g., transistors to reduce the power losses caused by diodes in many semiconductor technologies.

The input current in the totem pole PFC circuit may be measured in different ways including by adding sensors or current transformers. A "ton control" technique may be used for discontinuous conduction mode (DCM) Quasi-Resonant (QR) operation while avoiding continuous conduction mode (CCM) operation.

SUMMARY

A current sensor is described for a totem pole power factor correction circuit. In an example a power factor correction (PFC) circuit includes a first input node of an AC input voltage, a second input node of an AC input voltage, an inductor configured to generate an output voltage to an output load, an output voltage sensor configured to measure the output voltage, an output current measurement circuit configured to measure an output current to the output load, a first filter capacitor coupled between the first input node and the output voltage, a second filter capacitor coupled between the first input node and a low voltage, a first input node voltage sensor configured to measure a first input node voltage, capacitor compensation logic configured to receive the output current and the first input node voltage, to compensate the output current for the first filter capacitor and the second filter capacitor using the first input node voltage, and to generate a corrected output current, and a control system coupled to receive the output voltage and the corrected output current and configured to generate control signals to control the output voltage.

Some embodiments include an output capacitor coupled to the output voltage and the low voltage.

In some embodiments, the output capacitor is coupled to the output voltage on one side and coupled to ground on the other side. In some embodiments, the output current measurement circuit comprises a resistor connected between the output capacitor and the low voltage. In some embodiments, the first input node voltage sensor is configured to measure a filter capacitor voltage at the first input node. In some embodiments, the first input node voltage sensor comprises a voltage divider coupled between the first input node and to ground.

In some embodiments, the output voltage sensor comprises a voltage divider connected between the output load and ground. In some embodiments, the capacitor compensation logic is configured to take a time derivative of the first input node voltage to generate filter capacitor current. In some embodiments, the capacitor compensation logic comprises a delay register and a subtractor to take the time derivative by subtracting a delayed first input node voltage from the first input node voltage.

Some embodiments include a third filter capacitor coupled between the second input node and the output voltage, a fourth filter capacitor coupled between the second input node and ground, and a second input node voltage sensor configured to measure a second input node voltage, wherein the capacitor compensation logic is configured to receive the second input node voltage and to compensate the output current for the third filter capacitor and the fourth filter capacitor.

In some embodiments, the capacitor compensation logic determines a first filter capacitor current from the first input node voltage and a second filter capacitor current from the second input node voltage, the PFC circuit further comprising an adder configured to combine the first filter capacitor current and second filter capacitor current to compensate the output current.

In some embodiments, the combined first filter capacitor current and the second filter capacitor current comprise a secondary current from the inductor to the output capacitor.

In some embodiments, the capacitor compensation logic determines a filter capacitor current from the first input node voltage, the PFC circuit further comprising a correction circuit to apply the filter capacitor current to the corrected output current.

In some embodiments, the correction circuit doubles the filter capacitor current before applying the filter capacitor current to the corrected output current.

Some embodiments include switching elements coupled to the inductor and configured to regulate the inductor current to generate the output voltage to the output load, wherein the control system is coupled to the switching elements to send the control signals to the switching elements to control the output voltage.

In another example, a PFC circuit controller includes capacitor compensation logic configured to receive a PFC output current, and a first input node voltage from a first input node of an AC input voltage and a second input node voltage from a second input node of the AC input voltage, to generate a first filter capacitor current in response to the first input node voltage, to generate a second filter capacitor current from the second input node voltage to compensate the PFC output current for first filter capacitors using the first filter capacitor current and for second filter capacitors using the second filter capacitor current, and to generate a corrected output current, and a control system coupled to receive the output voltage and the corrected output current and configured to generate control signals to switching elements of the PFC circuit to control an output voltage of the PFC circuit.

In some embodiments, the capacitor compensation logic is configured to take a time derivative of the first input node voltage to generate the first filter capacitor current and to take a time derivative of the second input node voltage to generate the second filter capacitor current.

In another example, a power factor correction (PFC) circuit includes a first input node of an AC input voltage, a second input node of an AC input voltage, an inductor configured to generate an output voltage to an output load, first filter capacitors coupled to the first input node, a first input node voltage sensor configured to measure a first input node voltage, capacitor compensation logic configured to receive the output current and the first input node voltage, to generate a first filter capacitor current in response to the first input node voltage, and to compensate the output current for the filter capacitor current to generate a corrected output current, and a control system coupled to receive the output voltage and the corrected output current and configured to generate control signals to control the output voltage.

In some embodiments, the capacitor compensation logic generates a filter capacitor current by taking a time derivative of the first input node voltage using a delay register and a subtractor.

Some embodiments include second filter capacitors coupled to the second input node, and a second input node voltage sensor configured to measure a second input node voltage, wherein the capacitor compensation logic is configured to receive the second input node voltage, to generate a second filter capacitor current in response to the second input node voltage, to combine the first filter capacitor current and the second filter capacitor current to generate a combined current, and to compensate the output current for the combined current to generate a corrected output current.

Other aspects in accordance with the invention will become apparent from the following detailed description, taken in conjunction with the accompanying drawings, illustrated by way of example of the principles of the invention.

BRIEF DESCRIPTION OF THE DRAWINGS

Fig. 1 is a schematic circuit diagram of a switched mode power supply (SMPS) with a diode bridge rectifier and power factor corrector (PFC) boost converter.
Fig. 2 is a graph of a current over time for three operational modes of the SMPS of Fig. 1.
Fig. 3 is a schematic circuit diagram of a bridgeless totem pole boost PFC converter.
Fig. 4 is a is a schematic circuit diagram of a bridgeless totem pole boost PFC converter with additional filter capacitors in accordance with embodiments of the present disclosure.
Fig. 5 is a graph of inductor current (Ipfc) over time compared to the voltage at the Vf and Vs nodes for the PFC circuit of Fig. 4 in accordance with embodiments of the present disclosure.
Fig. 6 is a graph of the mains current (Imains) and Ipfc current over time as may be achieved using capacitor current compensation in accordance with selected embodiments of the present disclosure.

Fig. 7 is a graph of the Imains and Ipfc current over time as may be achieved by subtracting the capacitor current (Icf) in accordance with selected embodiments of the present disclosure.

Fig. 8 is a block diagram of a PFC controller suitable for use with a totem pole PFC circuit in accordance with selected embodiments of the present disclosure.

Fig. 9 is a block diagram of a portion of the Capacitor Compensation logic of Fig. 8 in accordance with selected embodiments of the present disclosure.

DETAILED DESCRIPTION

It will be readily understood that the components of the embodiments as generally described herein and illustrated in the appended figures could be arranged and designed in a wide variety of different configurations. Thus, the following more detailed description of various embodiments, as represented in the figures, is not intended to limit the scope of the present disclosure but is merely representative of various embodiments. While the various aspects of the embodiments are presented in drawings, the drawings are not necessarily drawn to scale unless specifically indicated.

The present invention may be embodied in other specific forms without departing from its spirit or essential characteristics. The described embodiments are to be considered in all respects only as illustrative and not restrictive. The scope of the invention is, therefore, indicated by the appended claims rather than by this detailed description. All changes which come within the meaning and range of equivalency of the claims are to be embraced within their scope.

Reference throughout this specification to features, advantages, or similar language does not imply that all of the features and advantages that may be realized with the present invention should be or are in any single embodiment of the invention. Rather, language referring to the features and advantages is understood to mean that a specific feature, advantage, or characteristic described in connection with an embodiment is included in at least one embodiment of the present invention. Thus, discussions of the features and advantages, and similar language, throughout this specification may, but do not necessarily, refer to the same embodiment.

Furthermore, the described features, advantages, and characteristics of the invention may be combined in any suitable manner in one or more embodiments. One skilled in the relevant art will recognize, in light of the description herein, that the invention can be practiced without one or more of the specific features or advantages of a particular embodiment. In other instances, additional features and advantages may be recognized in certain embodiments that may not be present in all embodiments of the invention.

Reference throughout this specification to "one embodiment," "an embodiment," or similar language means that a particular feature, structure, or characteristic described in connection with the indicated embodiment is included in at least one embodiment of the present invention. Thus, the phrases "in one embodiment," "in an embodiment," and similar language throughout this specification may, but do not necessarily, all refer to the same embodiment.

The Electromagnetic Interference (EMI) performance of an Integrated Circuit (IC) environment presents challenges for a totem pole PFC circuit. Filter capacitors are placed at specific points in the circuit to significantly improve the EMI performance in some totem pole PFC circuits. However, the filter capacitors impact the mains current and the PFC coil current that are measured to control the operation of the PFC circuit. As described herein, the effects of the filter capacitors are overcome so that there is no compromise is performance and capability. The described totem pole PFC circuit may be used to provide excellent Total Harmonic Distortion (THD) and EMI performance.

Existing low-cost solutions for operating and controlling a power-efficient PFC converter are extremely difficult at a practical level by virtue of the challenges with measuring the average PFC input current in totem pole PFC circuits while supporting all modes of operation and maintaining PF, THD and power efficiency performance. Further limitations and disadvantages of conventional processes and technologies will become apparent to one of skill in the art after reviewing the remainder of the present application with reference to the drawings and detailed description which follow.

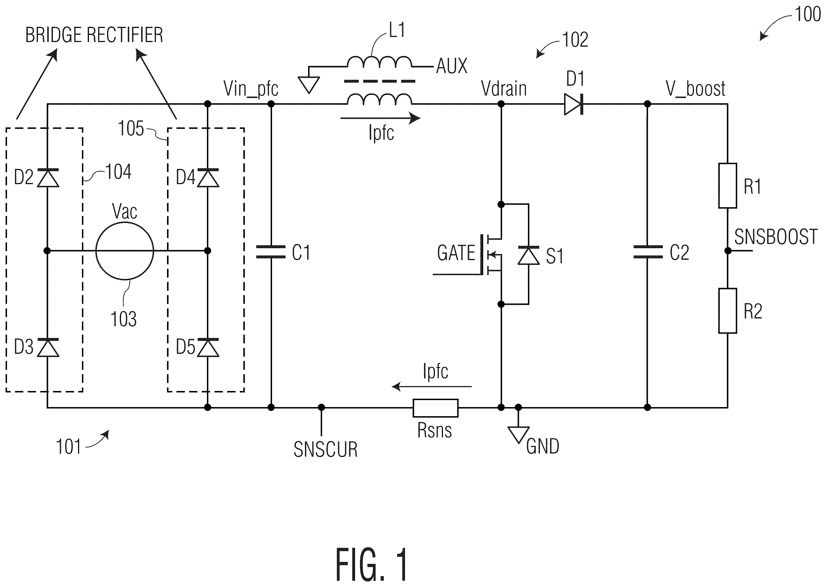

Fig. 1 is a schematic circuit diagram of a switched mode power supply (SMPS) 100 with a diode bridge rectifier 101 and power factor corrector (PFC) boost converter 102. The SMPS 100 is shown for context for the present invention. In the SMPS 100, an AC input voltage 103 (a.k.a., mains input voltage) is connected to the diode bridge rectifier 101 to generate a rectified input voltage (Vin_pfc) to the PFC boost converter 102 which includes a first input capacitor (C1), a second output capacitor (C2), a switching element (S1), an inductor (L1), a rectifier diode (D1), a shunt or sense resistor (Rsns), and an output voltage divider R1, R2 connected as shown. There may also be one or more EMI filter components (not shown).

In particular, the diode bridge rectifier 101 includes a first bridge arm 104 and second bridge arm 105 connected to first and second terminals of the AC input voltage Vac 103. The first bridge arm 104 includes a first diode D2 and a second diode D3 connected in series between the first inductor terminal of the inductor L1 and ground, with a first middle node which is coupled to a first terminal of the AC input voltage Vac 103. In addition, the second bridge arm 105 includes a third diode D4 and a fourth diode D5 connected in series between the first inductor terminal of the inductor L1 and ground, with a second middle node which is coupled to a second terminal of the AC input voltage Vac 103. In the PFC boost converter 102, a first inductor terminal of the inductor L1 is coupled over the first input capacitor (C1) to a first sense resistor terminal of the sense resistor (Rsns).

In addition, the second inductor terminal of inductor L1 is connected in series with rectifier diode (D1) to generate the output voltage (Vboost), with a first terminal of the rectifier diode (D1) and the second inductor terminal of inductor L1 connected over the switching element (S1) to a grounded second sense resistor terminal of the sense resistor (Rsns), and with a second terminal of the rectifier diode (D1) is connected over the second output capacitor (C2) to the grounded second sense resistor terminal of the sense resistor (Rsns). In addition, the voltage divider R1, R2 is connected between the second terminal of the rectifier diode (D1) and the grounded second sense resistor terminal of the sense resistor (Rsns) to provide a measure of the output voltage (Vboost), with a shared middle node of the series-connected resistors R1, R2 providing a measure of the output voltage (Vboost).

In operation, the AC input voltage 103 supplies a voltage to the SMPS 100. The first input capacitor (C1) is a filter capacitor for electromagnetic interference (EMI). In some applications, common mode and differential mode inductors and additional capacitors may also be present. The diode bridge rectifier 101 is employed to convert the power from the AC input voltage 103 to a rectified input voltage. The rectified input voltage (Vin_pfc) is used to produce a positive PFC input current (Ipfc) with respect to ground (GND), which is a switching current having a controlled switching frequency (e.g., 100 KHz). The PFC boost converter 102 acts as a power stage of the SMPS 100, and includes the first input capacitor (C1), switching element (S1), the inductor (L1), the rectifier diode (D1), and the output capacitor (C2). An output voltage (Vboost) of the PFC boost converter 2 may typically be higher than a peak of the AC input voltage 103. In some applications, the output voltage (Vboost) of the of the SMPS 100 may be connected to another SMPS (e.g., a flyback circuit or an LLC circuit).

The PFC input current flows through the inductor (L1) and back via the sense resistor (Rsns) acting as a shunt resistor. The PFC current can be determined by measuring the current at the sense resistor (Rsns) and dividing the result by the sense resistor's resistor value. The PFC input current may be used to control the average current of the PFC which enables the possibility for CCM operation and a control system to optimize Power Factor (PF) and THD performance for Discontinuous Conduction Mode (DCM), Boundary Conduction Mode (BCM) and CCM operation.

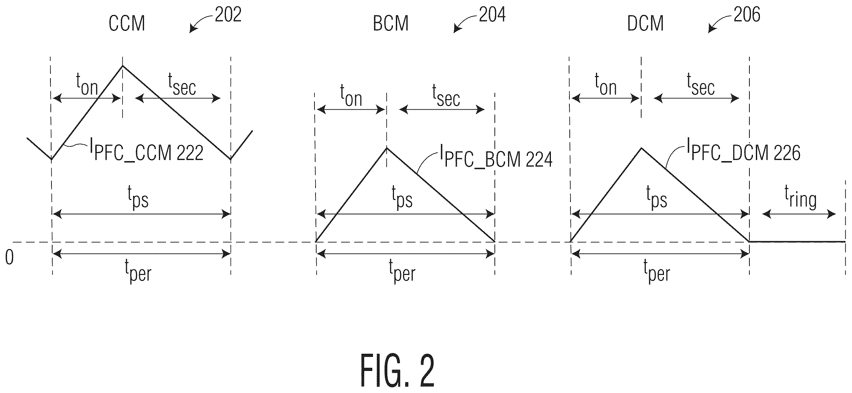

Fig. 2 is a graph of current over time for three operational modes of the SMPS of Fig. 1. In many examples, a PFC circuit is able to operate in all three different modes. The current operational mode may be determined by the timing of converter switch S1 operation. The operational mode is also affected by the input voltage, the output load, the output voltage, the inductor value, and other operational conditions of the circuit. The timing of the converter switch S1 operation also controls the ability of the SMPS circuit to control the output voltage (Vboost) generated by the PFC boost converter. A cycle-by-cycle controller (not shown) turns the converter switch S1 ON and OFF based on the measured PFC input current (Ipfc) at the PFC boost converter.

In each timing diagram of Fig. 2, the vertical axis depicts the PFC input current at the inductor L1 of the PFC boost converter 102, and the horizontal axis depicts time. In the first depicted continuous conduction mode (CCM) 202, the inductor current $I_{PFC\_CCM}$ 222 never reaches zero and the converter is conducting continuously. At the start of a power phase where the inductor current $I_{PFC\_CCM}$ 222 has reached its lowest point, the cycle-by-cycle controller turns the gate of the converter switch 106 to ON for the duration ton, and the inductor current $I_{PFC\_CCM}$ 222 increases through a primary stroke until reaching a peak corresponding to the transition to a secondary stroke. The duration of the primary stroke is the gate ON time indicated as ton. After the gate of the converter switch 106 is switched off for the duration tsec, the inductor current $I_{PFC\_CCM}$ 222 declines through the secondary stroke until the end of the period of the power cycle tper as defined by the primary stroke ton and the secondary stroke tsec. In the CCM 202, the combined duration of the primary and secondary strokes corresponds to a total duration of a power stroke tps = ton + tsec which is the same as the period of the power cycle tper. The end of the second stroke corresponds to the beginning of the next period and the start of the next primary stroke. The period of operation corresponds to frequency in the range of 20KHz - 500KHz, but can be lower or higher, depending on the converter/application.

In the second depicted Boundary Conduction Mode (BCM) mode 204, the primary and secondary strokes are very similar except that the gate of the converter switch is only turned ON when the inductor current $I_{PFC\_BCM}$ 224 reaches zero. In particular, the start of a power phase in the BCM mode 204 begins when the inductor current $I_{PFC\_BCM}$ 224 reaches zero and the cycle-by-cycle controller turns the gate of the converter switch 106 to ON for the duration ton. As depicted, the inductor current $I_{PFC\_BCM}$ 224 increases through a primary stroke until reaching a peak corresponding to the transition to a secondary stroke when the gate of the converter switch 6 is set to OFF. In response, inductor current $I_{PFC\_BCM}$ 34 decreases during the secondary stroke until a zero crossing is reached. In the BCM 224, the combined duration of the primary and secondary strokes ton, tsec corresponds to a total duration of a power stroke tps which is the same as the period of the power cycle tper. The time period tper in BCM mode may be increased by increasing the ON time ton and thereby increasing the primary stroke. The secondary stroke will accordingly become longer as well. Increasing the time period tper also increases the inductor current as the current becomes higher during the primary stroke.

In the third depicted Discontinuous Conduction Mode (DCM) mode 206, the inductor current $I_{PFC\_DCM}$ 226 has a "dead" period where no power is delivered for the duration tring. This "dead" period is an added delay after the secondary stroke and before the next primary stroke. In the DCM mode 206, the first stroke begins at a (almost) zero inductor current crossing time when the cycle-by-cycle controller turns the gate of the converter switch 106 to ON for the duration ton. The primary stroke extends through a current rise time until a peak inductor current I$_{PFC\_DCM}$ 226 is reached when the converter switch ON time is ended. When the converter switch 106 is turned to OFF, the current in the coil L1 is transferred to the output capacitor C2 until the current in the coil L1 reaches zero. During the secondary stroke tsec, the inductor current I$_{PFC\_DCM}$ 226 falls during the second stroke to a zero inductor current crossing. Instead of starting the next period at the end of this power phase, the converter switch 106 remains OFF for an additional time tring during a ringing phase. The end of the ringing phase is the end of the period tper at which time the next power phase begins with another primary stroke by turning the converter switch 106 to ON with a drive signal from the cycle-by-cycle converter. As a result, the combined duration of the DCM primary and secondary strokes ton, tsec corresponds to a total duration of a power stroke tps which is shorter the period of the power cycle tper.

The PFC current (Ipfc) can be measured directly at the sensing resistor (Rsns) or the PFC current can be calculated from the output current. The output current of the PFC is by approximation equal to the PFC coil current during the secondary stroke, Isec.

$$I_{pfc} = \frac{V_{boost}}{Vin_{pfc}} \cdot I_{sec} \qquad \text{(Eq. 1)}$$

where Vboost is the output voltage and VinPFC is the input voltage for the PFC circuit.

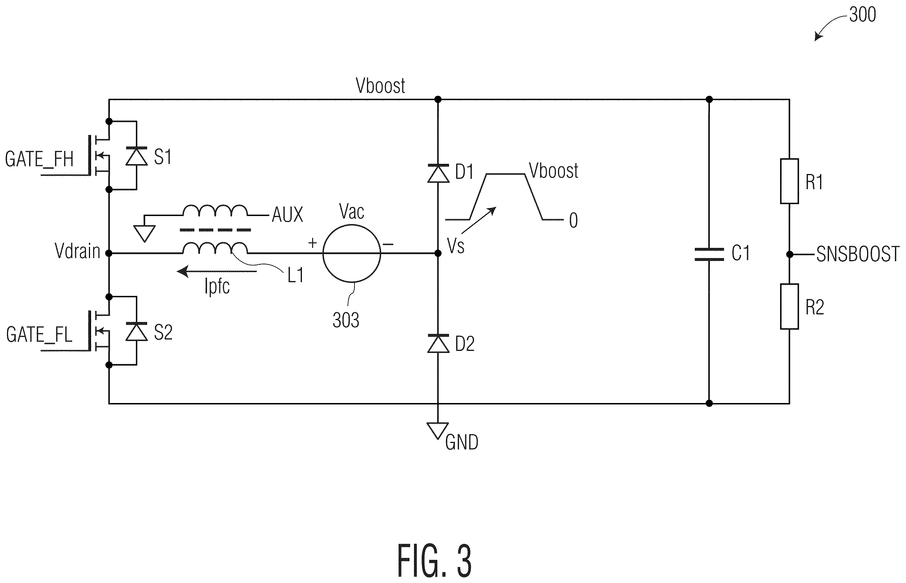

Fig. 3 is a schematic circuit diagram of a bridgeless totem pole boost PFC converter 300. A disadvantage of the diode bridge rectifier 101 of Fig. 1 is the energy losses in the diodes, which decreases the power efficiency of the PFC circuit. A totem pole PFC circuit avoids the diode bridge rectifier and the related losses and decreased power efficiency. As depicted, the bridgeless totem pole boost PFC converter 300 includes an AC input voltage 303 (a.k.a., mains input voltage), an inductor L1, at least two series-connected switching elements (S1, S2) to control the flow of current, series-connected diodes D1, D2, an output capacitor C1, and an output voltage divider with two resistors R1, R2 connected in series from the output voltage, Vboost, to ground, GND. In examples, the diodes D1, D2 can be replaced with switching elements which act as line transistors that are turned on and off at the input line frequency to short the internal body diodes of the switching element, thereby reducing power losses even further.

In operation, the switching elements (S1, S2) are connected in series between the output voltage node (Vboost) and ground, and the diodes D1, D2 are connected in series between the output voltage node (Vboost) and ground. The inductor L1 is connected between a first terminal of the AC input voltage 303 and a shared Vdrain node between the series-connected switching elements (S1, S2). The other terminal of the AC input voltage 303 is connected to a shared Vs node between the series-connected diodes D1, D2. The output capacitor C1 and output voltage divider R1, R2 are each connected in parallel with the series-connected switching elements (S1, S2) and the series-connected diodes D1, D2. The series-connected switching elements (S1, S2) can be any suitable switches, including MOSFETs, GaN transistors, SiC transistors, or the like. Neglecting possible synchronous rectification and/or zero voltage switching, the switching element S2 is used when the AC voltage is positive at the AC input voltage 103, and the switching element S1 is used when the AC voltage is negative at the AC input voltage 103.

The two switches S1, S2, are controlled by a GATE_FL control signal and a GATE_FH control signal from a system controller. Neglecting possible synchronous rectification and or zero voltage switching, GATE_FL is used when the mains is positive, and GATE_FH is used when the mains is negative. In an example operational mode, the voltage on the Vs node, a slow leg node, changes from a low voltage, e.g., about 0V to a high voltage, e.g., about the voltage of the output, Vboost, after the zero crossing of the mains voltage when the mains voltage is negative. The voltage on the Vs node changes from close to Vboost to back to a low or zero voltage when the mains voltage is positive after the zero crossing.

The totem pole boost PFC converter does not have a sense resistor in the feedback to a diode bridge rectifier. To measure the current, when the AC voltage is positive, the Ipfc current may be measured on the low side in the same way as in a PFC with a diode bridge as in Fig. 1. However, when the AC voltage is negative, then the current needs to be measured on the high side (Vboost) and the shared Vs node becomes (nearly) equal to the output voltage (Vboost). As this voltage is typical around 400V, it cannot be measured easily at low cost. Some current sensors can work at high voltages and convert the sensed current for use by the controller, but these can be expensive compared to the rest of the circuit. Alternatively, the output current of the PFC may be measured and used to calculate the PFC coil current.

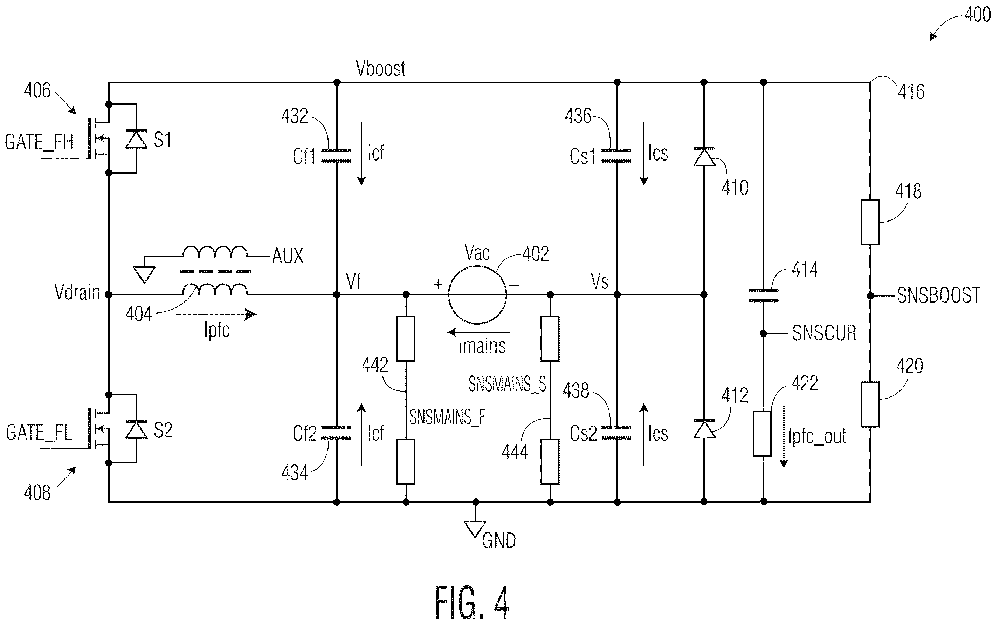

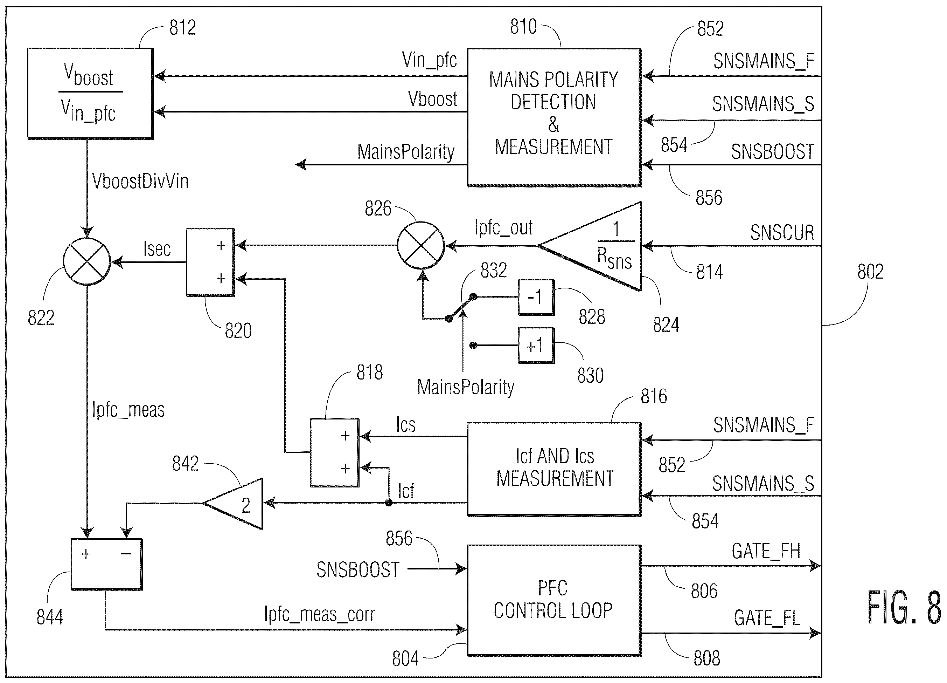

Fig. 4 is a is a schematic circuit diagram of a bridgeless totem pole boost PFC converter with additional filter capacitors to further improve EMI performance. The totem pole PFC boost converter 400 includes an AC input voltage 402 (a.k.a., mains voltage), an inductor 404 coupled to a first input node, the Vf node, of the AC input voltage 402 and coupled to a common drain node, Vdrain, of at least two series-connected switching elements 406, 408 to control the flow of current. The second input node, the Vs node, of the AC input voltage 402 is coupled to a junction between two series-connected diodes 410, 412. The present description is presented in terms of a first input node and a second input node and may be operated with only one of the two nodes. Either the Vs node or the Vf node may be considered the first input node and the other node considered the second input node. The two series connected switching elements 406, 408 actively switch the inductor 404 between the output, Vboost, and a low voltage, e.g., ground, GND, under the control of a PFC controller as shown, e.g., in Fig. 8.

An output capacitor 414 is coupled across the two series connected diodes opposite the Vs node and an output voltage divider with two resistors 418, 420 is connected in series from the output voltage, Vboost, and one of the diodes 410, to a low voltage, e.g., ground, GND and the other of the diodes 412. In examples, the diodes 410, 412 can be replaced with switching elements which act as line transistors that are turned on and off at the input line frequency to short the internal body diodes of the switching element, thereby reducing power losses even further. A current sensing resistor may be used as an output current sensor 422 of an output current measurement circuit that is coupled between the output capacitor 414 and GND. The output current, Ipfc_out, may be measured using this resistor.

The totem pole PFC boost converter 400 includes two additional pairs of filter capacitors. The first filter capacitors include a first pair of capacitors coupled in series and to the first input node, the Vf node with a first filter capacitor 432 of the first filter capacitors coupled to the output voltage, Vboost on one side, and to the Vf node of the AC input voltage 402 on the other side. A second filter capacitor of the first filter capacitors is coupled to the Vf node and to GND. The first filter capacitors are labeled Cf1 and Cf2, respectively and referred to as the Cf filter capacitors in reference to the Vf input node.

The second filter capacitors are coupled in series with a third filter capacitor 436 of the second filter capacitors coupled to the output voltage, Vboost, and to the Vs input node of the AC input voltage 402. A fourth filter capacitor of the second filter capacitors is coupled to the Vs node and to GND. The second filter capacitors are labeled Cs1 and Cs2, respectively and referred to as the Cs filter capacitors. The naming of the nodes and capacitors is for reference only and different names may be selected to refer to different nodes or for other purposes. The capacitance values of both the first and second filter capacitors, collectively, Cfs, may be the same to avoid peak-to-peak rectification through the filter capacitors. These filter capacitors significantly improve the EMI performance of the totem pole PFC boost converter 400.

The first filter capacitors coupled to the Vs node draw a first filter capacitor current from the first input node AC input voltage and the second filter capacitors coupled to the Vf node draw current from the second input node of the AC input voltage. Not all the PFC coil current Ipfc is flowing through the mains. A portion of the current flows from the main input nodes, Vf and Vs, to the Vboost and GND nodes or pins. After the filter capacitors are charged and the mains voltage has a zero crossing to the negative, an additional capacitor current is flowing from the filter capacitors through the inductor 404. After the zero crossing of the mains when the voltage on the Vs node is changed from Vboost to GND or vice versa. Consequently, a large current spike may occur especially when the circuit is controlled in an average current mode. Such a current spike may decrease the THD and audible noise performance.

The totem pole PFC boost converter 400 includes an F voltage sensor 442, or first input node voltage sensor, in the form of a voltage divider coupled on one side to the Vf node and on the other side to GND. The F voltage sensor measures the mains input voltage at the Vf node. An S voltage sensor 444 in the form of a second voltage divider is coupled to the Vs node on one side and to GND on the other side. The S voltage sensor, or second input node voltage sensor, measures the voltage at the Vs node. Any other suitable voltage sensor may be used. Vf and Vs are the mains input voltages, referred to as SNSMAINS_F and SNSMAINS_S. The PFC controller compares this to the output voltage, Vboost, measured at an output voltage sensor. The output voltage sensor may have a SNSBOOST pin between two resistors 418, 420 that form a voltage divider for the SNSBOOST pin. The actual voltage across the output load is Vboost-V(snscur), the voltage as measured across the output current sensor 422, but V(snscur) is much smaller than Vboost so that V(snscur) may be neglected.

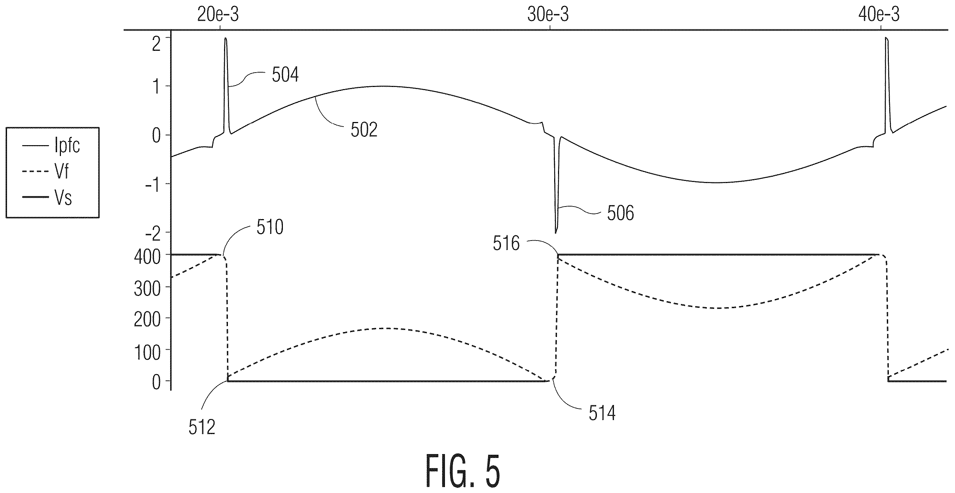

Fig. 5 is a graph of inductor current on the vertical axis over time compared to the voltage at the Vf and Vs nodes. The upper curve 502 shows the current following a sweeping curve from +1 to -1 amps over time. A first spike 504 occurs when the voltage of Vf and Vs nodes quickly goes from a full 400V at 510 to 0V at 512. An inverse spike 506 occurs when the voltage of the Vf and Vs nodes quickly goes from 0V at 514 back to 400V at 516.

Assuming the Vmains is greater t4han or equal to 0V, the PFC current including the Cfs capacitor currents is defined by:

$$I_{pfc} = I_{mains} + 2 \cdot I_{cf} \qquad \text{Eq. 2}$$

Consequently, even if the PFC coil current, Ipfc, is known, there can be a significant error. Especially when the PFC coil current is calculated based on the output current. Neglecting the Cf and Cs filter capacitors and power losses in the PFC circuit overall, the PFC coil current, depending on the PFC output current, is defined by:

$$I_{pfc} = \frac{V_{boost}}{V_{in\_pfc}} \cdot I_{pfc\_sec} = \frac{V_{boost}}{V_{in\_pfc}} \cdot I_{pfc\_out} \qquad \text{Eq. 3}$$

The quantity that is ultimately controlled in the power factor correction circuit is the output current Ipfc_out and the output voltage, Vboost, of the circuit. The output current Ipfc_out is disturbed by the filter capacitor currents which are flowing through the Cf and Cs filter capacitors and these currents change as the voltage cycles in accordance with the switches. The output current may be described by:

$$I_{pfc\_out} = I_{pfc_{sec}} - \left(I_{cs} + I_{cf}\right) \qquad \text{Eq. 4}$$

Ipfc_sec refers to the current that flows from the inductor of the PFC circuit during the secondary stroke of the inductor current, identified as during *tsec* in Fig. 2. During this time, the converter switch is OFF. During operation, it can happen that the Ipfc_sec current is equal to Ics+Icf. In that case, according to Eq. 4, there is no PFC current measured. When this happens the internal regulator of the PFC circuit drifts completely away, resulting in a much higher current request which is not needed. As a result, the PFC circuit responds by generating too much current producing a current spike until the Vs node transition is finished by the operation of the filter capacitors.

When the mains voltage, Vmain, goes negative, as a reversed polarity of the AC power, the Vs node will change from 0V to Vboost. Also, the PFC coil current, Ipfc, becomes the inverse (reverse direction) while the PFC output current, Ipfc_out, remains the same. The PFC coil current may be described by:

$$I_{pfc} = -\frac{V_{boost}}{V_{in_{pfc}}} \cdot \left(I_{pfc_{sec}} + \left(I_{cs} + I_{cf}\right)\right) \qquad \text{Eq. 5}$$

Accordingly, the filter capacitor currents in the Cf and Cs filter capacitors change the standard current measurements, e.g. current in and current out, that are used for a totem pole PFC circuit. These currents can be compensated for in the control system if the currents are known and measured. In one example, the currents can be measured by adding sense resistors, e.g., between a filter capacitor and a low voltage, e.g., ground for the Cf2 434 and Cs2 438 filter capacitors. Such sense resistors would allow Ics and Icf to be directly measured for use in, e.g., Equations 2, 4 and 5. Additional connections, e.g., pins, from the sense resistors and input to the controller would also be added which would increase the cost of the PFC circuit.

Instead of measuring the current directly, the currents may be determined using existing pins that are used to measure the mains voltage at the Vf node and the Vs node. As these voltage sensors and the associated connections, e.g., pins, are used to perform the mains measurement, the Cf and Cs current may be determined without adding any additional hardware or pins to the PFC controller. When all four Cs and Cf filter capacitors have equal capacitance values, the capacitor currents Ics and Icf should be the same or similar. Only one capacitor current needs to be measured. The capacitor current may then be used to compensate the mains current and or PFC coil current. As described above, the output current sensor 422 at a sense resistor provides a value for the output current Ipfc_out of the PFC circuit. However, a time derivative of the same voltage allows for the calculation of the capacitor current Ics as follows:

$$I_{cs} = \frac{-1}{C_s} \cdot \frac{dVs}{dt} \qquad \text{Eq. 6}$$

The compensation that is required in order to measure a correct measured PFC current, Ipfc_meas, depends on whether the mains current, Ipfc_mains, is positive or negative. This depends on the AC cycle of the input power at the AC input voltage 402. To distinguish the two different times during the power cycle, the current is labeled Ipfc_mains_pos for the positive part of the AC cycle and Ipfc_mains_neg for the negative part of the power cycle. The current may be described for the two cycle times as follows:

$$I_{pfc\_mains\_pos} = \frac{V_{boost}}{V_{in_{pfc}}} \cdot \left(I_{pfc_{out}} + \left(I_{cs} + I_{cf}\right)\right) \qquad \text{Eq. 7}$$

$$I_{pfc\_mains\_neg} = \frac{V_{boost}}{V_{in_{pfc}}} \cdot \left(-I_{pfc_{out}} + \left(I_{cs} + I_{cf}\right)\right) \qquad \text{Eq. 8}$$

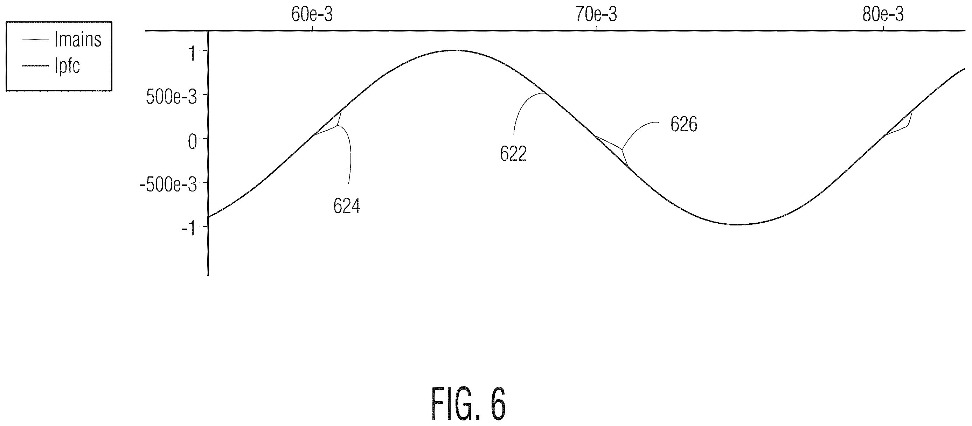

Fig. 6 is a graph of the Imains and Ipfc amplitude on the vertical axis over time on the horizontal axis as may be achieved using capacitor current compensation for the inductor 404. As shown, the PFC current (Ipfc) 622 as indicated by the primary sine curve is properly compensated. The mains current tracks with the PFC current as a sine wave but shows disturbances 624, 626 that are caused by the Cf and Cs capacitor currents, Icf. The mains current disturbances 624, 626 can be compensated by adjusting the measured PFC coil current for the currents through to the Cf filter capacitors by subtracting the Icf currents from the measured PFC coil current as shown in Eq. 9:

$$I_{pfc\_meas\_corr} = I_{pfc\_meas} - 2 \cdot I_{cf}. \quad \text{Eq. 9}$$

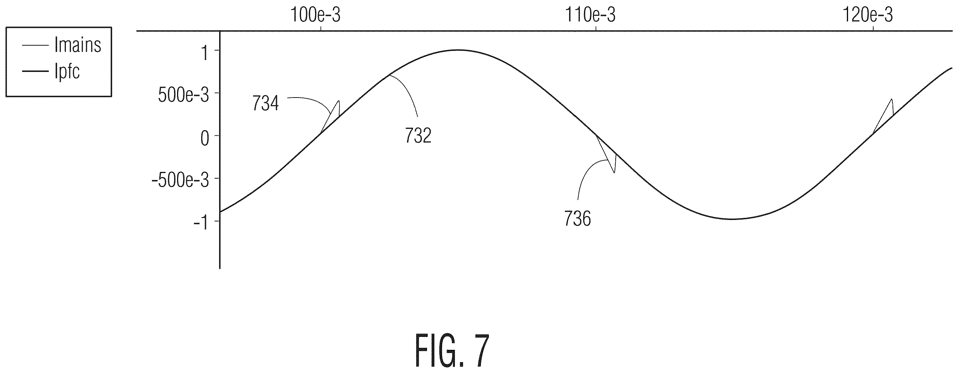

Fig. 7 is a graph of the Imains and Ipfc amplitude on the vertical axis over time on the horizontal axis as may be achieved by subtracting the Icf currents in accordance with Eq. 9. The mains current 732 is represented as a sine wave which will significantly improve the THD. The PFC coil current (Ipfc) tracks the sine wave and still has disturbances 734, 736. However, these disturbances 734, 736 will have little, if any, impact on the THD as the THD is determined by the mains current.

Fig. 8 is a block diagram of a PFC controller 802 suitable for use with a totem pole PFC circuit. The mains input voltages are measured via voltage sensors 442, 444, e.g., in the form of voltage dividers, which are coupled to the SNSMAINS_F pin 852 of the PFC controller 802 and the SNSMAINS_S pin 854 of the PFC controller 802. The output voltage Vboost is measured via a voltage divider with two resistors 418, 420 that is coupled to a SNSBOOST pin 856 of the PFC controller 802. The voltage across the output load is actually Vboost-V(snscur), but as V(snscur) is much smaller than Vboost, V(snscur) may be neglected. The SNSMAINS_F pin 852, the SNSMAINS_S pin 854, and the SNSBOOST pin 856 are coupled to Mains logic 810 of the PFC controller. The mains logic determines the mains polarity (positive or negative) by comparing the voltage on the SNSMAINS_F pin 852 to the SNSMAINS_S pin 854. The mains logic also determines the boost voltage (Vboost) and the PFC input voltage (Vin_pfc). The PFC input voltage (Vin_pfc) is equal to Vf when the mains is positive and Vboost-Vf when the mains is negative. The Mains logic 810 sends the boost voltage and the PFC input voltage to Output Current logic 812.

The Output Current logic 812 divides the PFC output voltage by the PFC input voltage (Vin_pfc) to generate VboostDivVin. The Output Current logic 812 is connected to receive the PFC input voltage (Vin_pfc) and boost voltage (Vboost) from the Mains logic 810. Based on these inputs, the Output Current logic 812 computes the quotient (Vboost/Vin_pfc) by dividing the output voltage (Vboost) by the PFC input voltage (Vin_pfc), thereby generating the output quotient (Vout_Div_Vin_PFC). This operation is the ratio of Eq. 3.

A Sense Current Divider 824 receives the voltage from the sense resistor 122 at a Snscur pin 814 of the PFC controller 802 and divides it by the resistance value of the sense resistor 122 to determine the PFC output current (Ipfc_out). The Ipfc_out corresponds to the left side of Eq. 4. The Sense Current Divider 824 is configured to compute the PFC output current (Ipfc_out) by dividing the SNSCUR voltage with the value of the sense resistor (Rsns). The PFC output current is compensated for the mains polarity using a -1 value register 828, a +1 value register 830, and a switch to generate a compensation factor to a multiplier 826. The switch is driven by the mains polarity determination of the Mains logic 810. The result of the multiplier 826 is the polarity compensated Ipfc_out.

The SNSMAINS_F pin 852, the SNSMAINS_S pin 854 are also coupled to Capacitor Compensation logic 816. The Capacitor Compensation logic 816 determines Ics and Icf applies these to an adder 818. The Capacitor Compensation logic has determined the first filter capacitor current, Icf, based on the first input node voltage, SNSMAINS_F, and the second filter capacitor current, Ics, based on the second input node voltage, SNSMAINS_S. The adder 118 combines the first filter capacitor current and the second filter capacitor current to obtain the sum. The sum of Ics + Icf from the adder 818, which is the combined first filter capacitor current and second filter capacitor current, corresponds to the sums in Eq. 4 and Eq. 5. The Ics and Icf compensation from the adder 818 is added at a second adder 820 obtain the secondary current, Isec as in Eq. 4, from adding the Ipfc_out from the sense current divider 824 with the Ics and Icf currents.

A multiplier 822 is coupled to the Output Current logic 812 and to the second adder 820 to receive the Isec (IpfcOut) from the second adder 820 and the VboostDivVin from the Output Current logic 812 and to multiply the Isec (IpfcOut) with VboostDivVin. This results in the measured PFC output current (Ipfc_meas). The multiplier performs the multiplication of Eq. 2 to the ratio from the Output Current logic 812. The measured PFC output current has been compensated by Isec of the PFC during a mains current measurement by Icf/Ics compensation. This value is then corrected or compensated to obtain the correct mains current as shown in Eq. 2.

The measured PFC output current, Ipfc_meas, is applied to an adder 844. The Icf, the first filter capacitor current, value from the Capacitor Compensation logic 816 is doubled in a doubler 842 that doubles the Icf value. This is approximately equal to Ics + Icf as in Eq. 5 and is applied to the adder 844. The result from applying the doubled filter capacitor current is the corrected output current as defined in Eq. 5 and labeled as Ipfc_meas_corr. This is provided to the control loop logic 804.

The average value of the measured PFC output current is equal to the average of the PFC coil current. The shape will be different. The output of the multiplier, the corrected output current, Ipfc_meas_corr is coupled to control loop logic 804. The control loop logic 804 generates control signals that control the action of the two series-connected switching elements 406, 408 using a GATE_FH control pin 806 and a GATE_FL control pin 808. The control loop logic 804 regulates the output voltage, Vboost, to a target value. In this way, the control loop controls the output voltage. The control loop may also contain a voltage loop, current loop, and gate control (not shown).

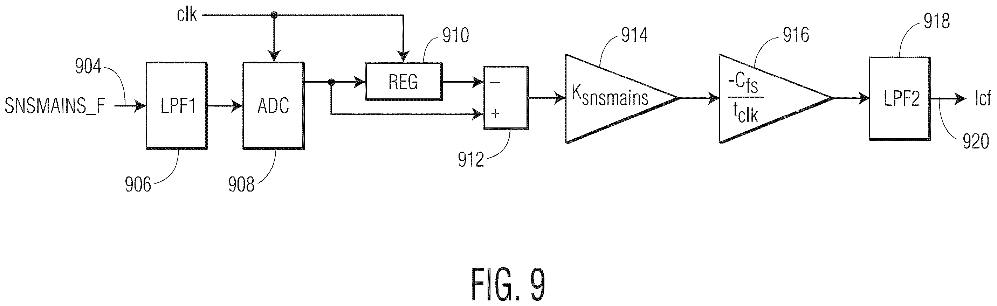

Fig. 9 is a block diagram of a portion of the Capacitor Compensation logic 816. The illustrated portion is for the Icf measurement. The capacitor compensation for the Ics measurement may be the same but using the SNSMAINS_S pin as the input instead. The SNSMAINS_F pin 904 is an input that provides a measurement of the mains voltage Vf of the F voltage sensor 442 via a voltage divider. The input voltage of the SNSMAINS_F pin 904 is provided to a first low pass filter 906 to avoid aliasing and is provided to an Analog-to-Digital Converter (ADS) 908 to be digitized by the ADC which is running at a specific predetermined clock frequency. The output of the ADC 908 can be delayed by a delay register 910 running at the same clock frequency. This output is a digitized version of the first input node voltage. A subtractor 912 receives the ADC output, the delayed first input node voltage, and the register output, the first input node voltage. The subtractor 912 takes the difference between the first input node of the mains voltage of the ADC 908 and the delayed first input node voltage, the delayed version from the delay register 910. This results in taking a time derivative of the first input node voltage to generate a filter capacitor current for the first filter capacitors, Cs.

To calculate the correct current through the output capacitor, the derivative is multiplied by corrective factors in a pair of multipliers. The first multiplier 914 compensates the derivative by K_snsmain. This is the K value defined by the resistance values of the two resistors of the voltage divider of the F voltage sensor 442 coupled to the AC input voltage 402, i.e., (R1+R2)/R2. The value of K_snsmains depends on the scaling of the resistance values of the voltage divider of the F voltage sensor 442 and of the ADC 908. A second multiplier compensates the compensated derivative also by the capacitance value of the Cf filter capacitors 432, 434 divided by the period time of the clock of the ADC 908 and the register 910 in a block 916. Additionally, the output can be filtered by a second low pass filter (LPF2) 918. The cut off frequency for the LPF2 may be configured to be higher than the frequency of interest.

The Fig. 9 diagram shows the current determination for the SNSMAINS_F pin 904 on the Vf side of the voltage source and affected by the Cf1, Cf2 filter capacitors 432, 434. The Icf value from the Capacitor Compensation logic 816 is doubled in a doubler 842 that doubles the Icf value and is then added in an adder 844 to the measured PFC current, Ipfc_meas, is applied to an adder 844. The result is the corrected mains current as defined in Eq. 5 and labeled as Ipfc_meas_corr that is provided to the control loop logic 804. However, the sum of Ics + Icf from the adder 818 corresponds to the sums in Eq. 4 and Eq. 5 and is used to obtain the secondary current, Isec as in Eq. 4.

Ics may be determined by the Capacitor Compensation logic 816 in a similar way to that shown in Fig. 9. For the other side of the mains voltage, the mains voltage Vs is provided from the SNSMAINS_S pin from the S voltage sensor 444. This may be filtered, converted to digital, combined with a delayed mains current and then compensated by the resistance and capacitances of the circuit in the same way as described for Icf to obtain a corrected Ics.

Although the configurations of the structures herein are shown and described in a particular order, the order of the structures of each example may be altered and additional component may be added to add additional operations or functionality that may be performed in addition to the operations and functions described herein.

Embodiments of the invention may be implemented entirely in analog hardware, digital hardware, a combination of analog and digital hardware, or in an implementation containing both hardware and software elements. In embodiments which use software, the software may include but is not limited to firmware, resident software, microcode, etc.

Although specific embodiments of the invention have been described and illustrated, the invention is not to be limited to the specific forms or arrangements of parts so described and illustrated. The scope of the invention is to be defined by the claims appended hereto and their equivalents.

**Claims**

1. A power factor correction, PFC, circuit comprising:

> a first input node of an AC input voltage;
> a second input node of an AC input voltage;
> an inductor configured to generate an output voltage to an output load;
> an output voltage sensor configured to measure the output voltage;
> an output current measurement circuit configured to measure an output current to the output load;
> a first filter capacitor coupled between the first input node and the output voltage;
> a second filter capacitor coupled between the first input node and a low voltage;
> a first input node voltage sensor configured to measure a first input node voltage;
> capacitor compensation logic configured to receive the output current and the first input node voltage, to compensate the output current for the first filter capacitor and the second filter capacitor using the first input node voltage, and to generate a corrected output current; and
> a control system coupled to receive the output voltage and the corrected output current and configured to generate control signals to control the output voltage.

2. The PFC circuit of claim 1, further comprising an output capacitor coupled to the output voltage and the low voltage.

3. The PFC circuit of claim 2, wherein the output capacitor is coupled to the output voltage on one side and coupled to ground on the other side.

4. The PFC circuit of any preceding claim, wherein the output current measurement circuit comprises a resistor connected between the output capacitor and the low voltage.

5. The PFC circuit of any preceding claim, wherein the first input node voltage sensor is configured to measure a filter capacitor voltage at the first input node.

6. The PFC circuit of claim 5, wherein the first input node voltage sensor comprises a voltage divider coupled between the first input node and to ground.

7. The PFC circuit of any preceding claim, wherein the output voltage sensor comprises a voltage divider connected between the output load and ground.

8. The PFC circuit of any preceding claim, wherein the capacitor compensation logic is configured to take a time derivative of the first input node voltage to generate filter capacitor current.

9. The PFC circuit of claim 8, where the capacitor compensation logic comprises a delay register and a subtractor to take the time derivative by subtracting a delayed first input node voltage from the first input node voltage.

10. The PFC circuit of any preceding claim, further comprising:

   a third filter capacitor coupled between the second input node and the output voltage;
   a fourth filter capacitor coupled between the second input node and ground; and
   a second input node voltage sensor configured to measure a second input node voltage,
   wherein the capacitor compensation logic is configured to receive the second input node voltage and to compensate the output current for the third filter capacitor and the fourth filter capacitor.

11. The PFC circuit of claim 10, wherein the capacitor compensation logic determines a first filter capacitor current from the first input node voltage and a second filter capacitor current from the second input node voltage, the PFC circuit further comprising an adder configured to combine the first filter capacitor current and second filter capacitor current to compensate the output current.

12. The PFC circuit of claim 11, wherein the combined first filter capacitor current and the second filter capacitor current comprise a secondary current from the inductor to the output capacitor.

13. The PFC circuit of any preceding claim, wherein the capacitor compensation logic determines a filter capacitor current from the first input node voltage, the PFC circuit further comprising a correction circuit to apply the filter capacitor current to the corrected output current.

14. The PFC circuit of claim 13, wherein the correction circuit doubles the filter capacitor current before applying the filter capacitor current to the corrected output current.

15. The PFC circuit of any preceding claim, further comprising

   switching elements coupled to the inductor and configured to regulate the inductor current to generate the output voltage to the output load,
   wherein the control system is coupled to the switching elements to send the control signals to the switching elements to control the output voltage.

**Amended claims in accordance with Rule 137(2) EPC.**

1. A power factor correction, PFC, circuit comprising:

   a first input node of an AC input voltage;

a second input node of an AC input voltage;

an inductor coupled to the first input node of the AC input voltage and coupled to a common drain node of at least two series-connected switching elements, the inductor being configured to generate an output voltage to an output load;

two series connected diodes coupled between the output voltage and a low voltage, with the junction between the diodes coupled to the second input node of the AC input voltage;

an output voltage sensor configured to measure the output voltage;

an output current measurement circuit configured to measure an output current to the output load;

a first filter capacitor coupled between the first input node and the output voltage;

a second filter capacitor coupled between the first input node and the low voltage;

a third filter capacitor coupled between the second input node and the output voltage;

a fourth filter capacitor coupled between the second input node and the low voltage;

a first input node voltage sensor configured to measure a first input node voltage;

a second input node voltage sensor configured to measure a second input node voltage;

capacitor compensation logic configured to receive the output current and the first and second input node voltages,

to determine a first filter capacitor current from the first input node voltage by taking a time derivative of the first input node voltage,

to determine a second filter capacitor current from the second input node voltage by taking a time derivative of the second input node voltage,

to combine the first and second filter capacitor currents, and

to apply the combined filter capacitor currents as a correction to the output current to generate a corrected output current; and

a control system coupled to receive the output voltage and the corrected output current and configured to generate control signals to control at least two series-connected switching elements to control the output voltage.

2. The PFC circuit of claim 1, further comprising an output capacitor coupled to the output voltage and the low voltage.

3. The PFC circuit of claim 2, wherein the output capacitor is coupled to the output voltage on one side and coupled to ground on the other side.

4. The PFC circuit of any preceding claim, wherein the output current measurement circuit comprises a resistor connected between the output capacitor and the low voltage.

5. The PFC circuit of any preceding claim, wherein the first input node voltage sensor is configured to measure a filter capacitor voltage at the first input node.

6. The PFC circuit of claim 5, wherein the first input node voltage sensor comprises a voltage divider coupled between the first input node and to ground.

7. The PFC circuit of any preceding claim, wherein the output voltage sensor comprises a voltage divider connected between the output load and ground.

8. The PFC circuit of any preceding claim, wherein the capacitor compensation logic is configured to take a time derivative of the first input node voltage to generate filter capacitor current.

9. The PFC circuit of claim 8, where the capacitor compensation logic comprises a delay register and a subtractor to take the time derivative by subtracting a delayed first input node voltage from the first input node voltage.

FIG. 1

EP 4 757 156 A1

FIG. 2

EP 4 757 156 A1

FIG. 3

**FIG. 4**

FIG. 5

EP 4 757 156 A1

FIG. 6

EP 4 757 156 A1

FIG. 7

EP 4 757 156 A1

FIG. 8

FIG. 9

Europäisches
Patentamt

European
Patent Office

Office européen
des brevets

## EUROPEAN SEARCH REPORT

**Application Number**

**EP 25 21 8986**

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/006153 A1 (BHARDWAJ MANISH [US]) 7 January 2021 (2021-01-07) * paragraphs [0044] - [0055]; figures 3,4 * ----- | 1-15 | INV. H02M1/42 H02M1/44 |
| A | CN 108 696 158 A (UNIV NANJING AERONAUTICS & ASTRONAUTICS) 23 October 2018 (2018-10-23) * abstract; figure 3 * ----- | 1-15 | ADD. H02M1/00 H02M1/12 |
| A | CN 205 123 575 U (INVENTRONICS CO LTD) 30 March 2016 (2016-03-30) * abstract; figures 2,6 * ----- | 1-15 | |

**TECHNICAL FIELDS SEARCHED (IPC)**

H02M

The present search report has been drawn up for all claims

| Place of search | Date of completion of the search | Examiner |
|---|---|---|
| The Hague | 13 March 2026 | Gusia, Sorin |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.........................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 21 8986

This annex lists the patent family members relating to the patent documents cited in the above-mentioned European search report.
The members are as contained in the European Patent Office EDP file on
The European Patent Office is in no way liable for these particulars which are merely given for the purpose of information.

13-03-2026

| Patent document cited in search report | Publication date | Patent family member(s) | Publication date |
|---|---|---|---|
| US 2021006153 A1 | 07-01-2021 | US 2019097527 A1<br>US 2021006153 A1<br>US 2021281165 A1<br>US 2023261566 A1<br>US 2024339925 A1 | 28-03-2019<br>07-01-2021<br>09-09-2021<br>17-08-2023<br>10-10-2024 |
| CN 108696158 A | 23-10-2018 | NONE | |
| CN 205123575 U | 30-03-2016 | NONE | |

EPO FORM P0459

For more details about this annex : see Official Journal of the European Patent Office, No. 12/82